# EUROPÄISCHE PATENTSCHRIFT

(11) **EP 3 289 673 B1**
(45) Veröffentlichungstag und Bekanntmachung des Hinweises auf die Patenterteilung: **25.08.2021**
(21) Anmeldenummer: 16716555.4
(22) Anmeldetag: 14.04.2016
(51) Int. Cl.: H02K 21/12

(54) **MEHRPHASIGE TRANSVERSALFLUSSMASCHINE**
MULTIPHASE TRANSVERSAL FLUX MACHINE
MACHINE À FLUX TRANSVERSAL MULTIPHASÉE

(30) Priorität: 01.06.2015 DE 102015210032
(43) Veröffentlichungstag der Anmeldung: 07.03.2018
(73) Patentinhaber: Rolls-Royce Deutschland Ltd & Co KG, 15827 Blankenfelde-Mahlow (DE)
(72) Erfinder: HAMANN, Jens, 15827 Blankenfelde-Mahlow (DE); STOIBER, Dietmar, 15827 Blankenfelde-Mahlow (DE)
(86) Internationale Anmeldenummer: PCT/EP2016/058215
(87) Internationale Veröffentlichungsnummer: WO 2016/192881

(56) Entgegenhaltungen:
- EP-A1- 2 605 367
- WO-A1-92/10023

## Beschreibung

Die Erfindung betrifft eine mehrphasige Transversalflussmaschine mit einem Stator und einem Rotor, der in einer Umfangsrichtung um eine Achse relativ zum Stator drehbar ist. Die Transversalflussmaschine kann als Motor (z.B. Torque-Motor oder Linearmotor) bzw. als entsprechender Generator ausgebildet sein.

Heutige Torque-Motoren besitzen typischerweise eine Leistungsdichte von 1 kW/kg. In sämtlichen technischen Zweigen, in denen derartige Motoren eingesetzt werden, ist man jedoch unter anderem auch bemüht, diese Leistungsdichte zu verbessern. Dies wäre insbesondere in der Automobilindustrie, besonders aber auch in der Flugzeugindustrie von Vorteil. Speziell in der Flugzeugindustrie werden Antriebssysteme mit einer Leistungsdichte von 8 kW/kg benötigt.

Derzeit werden elektrische Antriebssysteme in der Regel nur für Modellflugzeuge eingesetzt. Von der Firma Geiger Engineering ist beispielsweise ein hochpoliger Motor als Flugzeugelektromotor ohne Getriebe bekannt. Er besitzt eine Magnetpolanzahl von 42 und eine Leistung von 20 kW bei einer Grenzdrehzahl von 2500 Umdrehungen pro Minute. Für die Startphase hat dieser Motor ein Leistungsgewicht von 3,6 kW/kg.

In Transversalflussmaschinen verläuft der magnetische Fluss transversal (senkrecht) zur Drehebene. Bei dreiphasigen Transversalflussmaschinen hat jede Phase üblicherweise eine eigene Erregung. Es sind aber auch Transversalflussmaschinen bekannt, bei denen die drei Phasen von nur einem Permanentmagnetsystem gespeist werden. Transversalflussmaschinen besitzen die Möglichkeit, hohe Polpaarzahlen zu verwirklichen und weisen damit kleine Polteilungen auf. Damit wird das Eisengewicht pro Pol klein und folglich ergibt sich ein günstiges Leistungsgewicht. Aufgrund der Ringwicklung entfallen die Wickelköpfe.

Aus dem Dokument WO 2013/087412 A1 ist eine mehrphasige Transversalflussmaschine bekannt, bei der auf dem Rotor Halbach-Arrays angeordnet sind. Zur Ausbildung eines geschlossenen Magnetflusses sind ferner I-Kerne vorgesehen, die im Stator benachbart zu entsprechenden Jochen angeordnet sind. Durch die räumliche Nähe der Joche zu den I-Kernen entsteht das Problem, dass ein unerwünschter Querfluss auftritt, der eine magnetische Sättigung zwischen den Jochen und den I-Kernen verursacht. Dies hat zur Folge, dass die Drehmomentausbeute bei hohen Strömen stagniert.

Aus dem Dokument WO 92/10023 A1 ist eine stromrichtergespeiste Synchronmaschine mit einem Rotor, der mindestens eine Polstruktur aufweist, mit nebeneinanderliegenden Reihen aus wechselweise magnetisierten Permanentmagneten und dazwischenliegenden Weicheisenelementen bekannt. Jeder Polstruktur liegt ein aus zwei Teilen aufgebauter Stator gegenüber. Die Anordnung ist so ausgestaltet, dass die in Umfangsrichtung verlaufende Erregerwicklung im Stator nur auf einen Teil des Stators konzentriert ist, wobei der andere Stator frei ist von Wicklungen. Die Ringwicklung ist im Außenstator untergebracht, während der Innenstator nur als Rückschlusselement innerhalb des Rotors dient zur Erzielung des transversalen Magnetflusses.

Aufgabe der Erfindung ist es deshalb, eine mehrphasige Transversalflussmaschine mit einer verbesserten Drehmomentausbeute zu schaffen.

Diese Aufgabe wird durch die Transversalflussmaschine gemäß Patentanspruch 1 gelöst. Weiterbildungen der Erfindung sind in den abhängigen Ansprüchen definiert.

Die erfindungsgemäße Transversalflussmaschine umfasst einen Stator und einen Rotor, wobei der Rotor in einer Umfangsrichtung um eine Achse relativ zum Stator drehbar ist. Der Rotor und der Stator sind vorzugsweise ringförmig ausgebildet, so dass die Umfangsrichtung einer Kreisbahn entspricht. Die Transversalflussmaschine beinhaltet für eine jeweilige Stromphase die im Folgenden erläuterten Komponenten.

Es ist eine elektrische Leitung (insbesondere eine Ringleitung) vorgesehen, die entlang einer Mehrzahl von Jochen in der Umfangsrichtung verläuft, wobei die Leitung und die Mehrzahl von Jochen in dem Stator angeordnet sind. Der Begriff der Leitung ist weit zu verstehen. Insbesondere kann eine Leitung aus einem einzelnen Leiter oder aus einer Vielzahl von Einzelleitern bestehen.

Es ist ein Paar von in Umfangsrichtung parallel verlaufender Permanentmagnetarrays vorgesehen, welche jeweils eine Vielzahl von Permanentmagneten umfassen. Die Permanentmagnetarrays sind im Rotor ausgebildet. Im Stator ist ferner eine Mehrzahl von Rückschlusskörpern vorgesehen, wobei jedem Joch ein Rückschlusskörper zugeordnet ist, der von dem zugehörigen Joch (d.h. dem Joch, dem der Rückschlusskörper zugeordnet ist) in radialer Richtung (d.h. in Richtung senkrecht zur Achse der Transversalflussmaschine) beabstandet ist. Dies bedeutet, dass es, gesehen in Richtung der Umfangsrichtung, zu keiner Überlappung zwischen dem Querschnitt des Rückschlusskörpers und dem Querschnitt des zugehörigen Jochs kommt.

In der erfindungsgemäßen Transversalflussmaschine verändert sich die Magnetisierungsrichtung der Permanentmagneten in den Permanentmagnetarrays derart, dass ein geschlossener Magnetfluss an jedem Joch wiederholt während der Drehung des Rotors auftritt, wobei der geschlossene Magnetfluss von einem Permanentmagnetarray des Paars über ein jeweiliges Joch zu dem anderen Permanentmagnetarray des Paars und von dort über den dem jeweiligen Joch zugeordneten Rückschlusskörper zurück zu dem einen Permanentmagnetarray des Paars verläuft.

Die erfindungsgemäße Transversalflussmaschine zeichnet sich dadurch aus, dass durch die Beabstandung des Rückschlusskörpers vom Joch Querflüsse vermieden werden, so dass hierdurch einer magnetischen Sättigung entgegengewirkt wird. Gleichzeitig wird ein Rückschluss des Magnetflusses über die Rückschlusskörper durch geeignete Veränderung der Magnetisierungsrichtung in den Permanentmagnetarrays erreicht.

In einer besonders bevorzugten Ausführungsform ist ein erster Spalt zwischen jedem Permanentmagnetarray und jedem Joch vorgesehen, der üblicherweise auch als Luftspalt bezeichnet wird. Darüber hinaus ist ein zweiter Spalt zwischen jedem Rückschlusskörper und jedem Permanentmagnetarray ausgebildet. Dieser zweite Spalt liegt in einer anderen Ebene als der erste Spalt. Der geschlossene Magnetfluss tritt dabei am ersten Spalt und am zweiten Spalt über. Der erste Spalt ist zwischen den Unterseiten der jeweiligen Joche und den jeweiligen darunterliegenden Permanentmagnetarrays gebildet. Der zweite Spalt ist zwischen einer jeweiligen Außenseite des Rückschlusskörpers und einer jeweiligen Innenseite der Permanentmagnetarrays gebildet. Der Begriff der "anderen Ebene" ist allerdings weit zu verstehen. Insbesondere müssen die beiden Ebenen des ersten und zweiten Spalts nicht zwangsläufig gegeneinander verdreht sein, sondern sie können auch lediglich versetzt sein. Vorzugsweise ist jedoch die Ebene des zweiten Spalts um 90° gegenüber der Ebene des ersten Spalts gedreht.

In einer besonders bevorzugten Ausführungsform sind die jeweiligen Rückschlusskörper zwischen den Permanentmagnetarrays des Paars angeordnet. Hierdurch wird ein kompakter Aufbau der Transversalflussmaschine erreicht.

In einer weiteren, besonders bevorzugten Ausführungsform ist ein jeweiliger Rückschlusskörper gegenüber dem zugehörigen Joch in Umfangsrichtung versetzt. Auch hierdurch wird eine Vergrößerung des Abstands zwischen Joch und Rückschlusskörper und damit ein verringerter Querfluss erreicht.

In einer weiteren bevorzugten Ausführungsform sind die Permanentmagnete der jeweiligen Permanentmagnetarrays in Umfangsrichtung direkt benachbart zueinander angeordnet. Es kann somit auf Flusssammler verzichtet werden.

In einer weiteren, besonders bevorzugten Ausführungsform sind die jeweiligen Permanentmagnetarrays in wiederholende Abschnitte entlang der Umfangsrichtung aufgeteilt, wobei sich die Magnetisierungsrichtung der Permanentmagnete des jeweiligen Permanentmagnetarrays derart verändert, dass sich die Richtung des geschlossenen Magnetflusses von einem Abschnitt zum nächsten umkehrt und sich der geschlossene Magnetfluss in jedem Abschnitt von einer Richtung im Wesentlichen senkrecht zum ersten Spalt zu einer Richtung im Wesentlichen senkrecht zum zweiten Spalt oder von einer Richtung im Wesentlichen senkrecht zum zweiten Spalt zu einer Richtung im Wesentlichen senkrecht zum ersten Spalt dreht.

Vorzugsweise ist die erfindungsgemäße Transversalflussmaschine dreiphasig ausgestaltet. Ferner weist der Rotor vorzugsweise den Querschnitt eines Dreiecks auf, wobei an jeder Dreiecksseite für eine Stromphase ein Paar von Permanentmagnetarrays vorgesehen ist und Rückschlusskörper in Ausnehmungen an jeder Dreiecksseite geführt sind. Nichtsdestotrotz sind auch Ausgestaltungen des Rotors als Quadrat bzw. als Sechseck und dergleichen möglich.

In einer besonders bevorzugten Ausführungsform sind die Joche der Transversalflussmaschine U-förmig, wobei eine jeweilige Leitung zwischen den Schenkeln der U-förmigen Joche einer entsprechenden Phase angeordnet ist.

In einer weiteren bevorzugten Ausgestaltung weist eine jeweilige Leitung der Transversalflussmaschine einen kreisförmigen Außendurchmesser auf. Ferner ist eine jeweilige Leitung vorzugsweise als Hohlleiter ausgebildet, in dessen Innerem eine Kühlflüssigkeit geführt ist oder eine Heat-Pipe vorgesehen ist. Hierdurch wird eine effiziente Kühlung der Maschine bei deren Betrieb erreicht.

Ausführungsbeispiele der Erfindung werden nachfolgend anhand der beigefügten Figuren detailliert beschrieben.

Es zeigen:
- Fig. 1: eine perspektivische Darstellung eines Ausschnitts einer Ausführungsform der erfindungsgemäßen Transversalflussmaschine; und
- Fig. 2: eine perspektivische Darstellung, welche den Gesamtaufbau einer Ausführungsform der erfindungsgemäßen Transversalflussmaschine verdeutlicht.

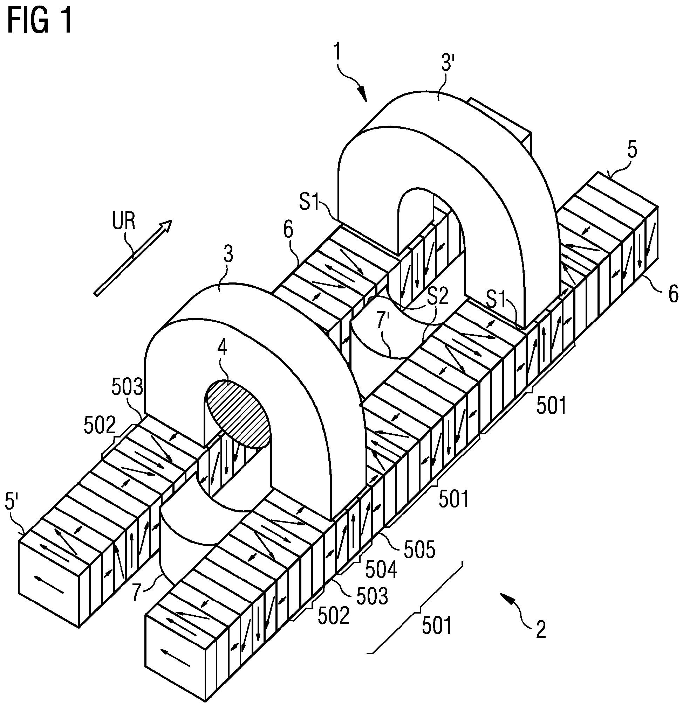

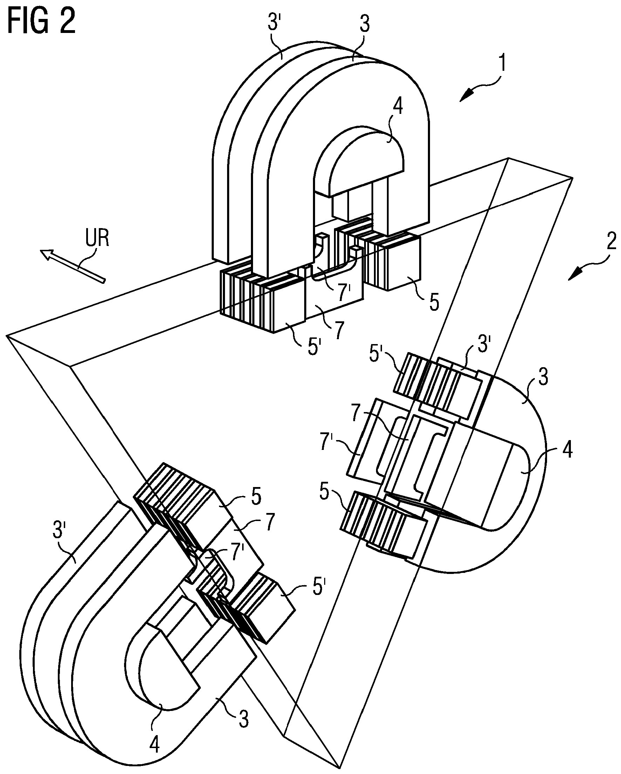

Fig. 1 zeigt in perspektivischer Darstellung einen Ausschnitt des Aufbaus einer Variante der erfindungsgemäßen Transversalflussmaschine, wobei der Ausschnitt eine einzelne Phase wiedergibt. Bei der Transversalflussmaschine handelt es sich um eine dreiphasige Transversalflussmaschine, deren Gesamtaufbau in der weiter unten beschriebenen Fig. 2 gezeigt ist.

Die Transversalflussmaschine der Fig. 1 umfasst einen Stator 1, von dem ausschnittsweise zwei Joche 3 und 3', zwei Rückschlusskörper 7 und 7' sowie eine Ringleitung 4 wiedergegeben sind. Benachbart zu dem Stator ist ein Rotor 2 vorgesehen, von dem lediglich zwei im Rotor integrierte Permanentmagnetarrays 5 und 5' dargestellt sind. Der Rotor und der Stator sind kreisförmig ausgestaltet und erstrecken sich in der Umfangsrichtung UR um eine (nicht gezeigte) Achse der Transversalflussmaschine, um die sich der Rotor gegenüber dem Stator dreht.

Entlang der Umfangsrichtung UR ist im Stator eine Vielzahl von aufeinander folgenden U-förmigen Jochen 3 und 3' vorgesehen, wobei die Anzahl der Joche entsprechend der Polanzahl der Transversalflussmaschine geeignet festgelegt ist. Die Joche bestehen in an sich bekannter Weise aus Weicheisen und entlang der Joche wird zwischen den Schenkeln ihrer U-Formen die Ringleitung 4 geführt, welche aus Übersichtlichkeitsgründen lediglich als schraffierter Kreis am Joch 3 angedeutet ist. Die Transversalflussmaschine kann dabei als Motor verwendet werden, indem Strom durch die Ringleitung 4 in jeder einzelnen Phase der Maschine geführt wird. Ebenso kann die Transversalflussmaschine als Generator eingesetzt werden, wobei in diesem Fall durch Drehung des Rotors ein Drehstrom in den Leitungen 4 der einzelnen Phasen generiert wird.

Die einzelnen Rückschlusskörper 7 und 7', die Teil des Stators 1 sind, werden in einer entsprechenden Ausnehmung im Rotor zwischen den beiden Permanentmagnetarrays 5 und 5' geführt. Die beiden Permanentmagnetarrays drehen sich somit relativ zu den Rückschlusskörpern 7 und 7'. Die Rückschlusskörper bestehen analog wie die Joche 3 und 3' aus Weicheisen und dienen dazu, den Magnetfluss, der mit den beiden Permanentmagnetarrays generiert wird und über ein jeweiliges Joch verläuft, zu schließen. Jeder Rückschlusskörper ist einem Joch zugeordnet. Mit anderen Worten gehört der Rückschlusskörper 7 zu dem Joch 3 und der Rückschlusskörper 7' zu dem Joch 3'. Die Rückschlusskörper sind dabei in Umfangsrichtung UR gegenüber dem zugeordneten Joch versetzt.

Herkömmlicherweise werden zur Ausbildung eines geschlossenen Magnetflusses I-förmige Rückschlusskörper (I-Kerne) verwendet, die nicht zwischen den beiden Permanentmagnetarrays 5 und 5', sondern auf der Oberseite dieser Arrays angeordnet sind. Dabei wird der Magnetfluss in den Permanentmagnetarrays umgekehrt, um zwischen Joch und I-Kern fließen zu können. Diese Anordnung hat jedoch den Nachteil, dass die I-förmigen Rückschlusskörper sehr nahe an den Jochen positioniert sind, was dazu führt, dass ein unerwünschter magnetischer Querfluss zwischen den I-Kernen und den Jochen auftritt, der zu einer Sättigung führt. Demzufolge stagniert bei hohen Strömen die Drehmomentausbeute.

Mit der Anordnung der Fig. 1 wird dieser Nachteil behoben. Wie man erkennt, sind die Rückschlusskörper 7 bzw. 7' nunmehr in einem größeren Abstand von den zugehörigen Jochen 5 bzw. 5' angeordnet. Insbesondere sind die Rückschlusskörper in radialer Richtung (d.h. in Richtung senkrecht zur Achse der Transversalflussmaschine) von den Jochen beabstandet. Mit anderen Worten kommt es bei Blickrichtung in Umfangsrichtung UR zu keiner Überdeckung des Querschnitts der Rückschlusskörper mit den entsprechenden Jochen. Um dennoch einen geschlossenen Magnetfluss zu generieren, wird ein spezieller Verlauf der Magnetisierungsrichtungen in den einzelnen Permanentmagnetarrays 5 bzw. 5' festgelegt, wie im Folgenden näher erläutert wird.

Die Anordnung der beiden Permanentmagnetarrays 5, 5' in Bezug zu den Jochen 3, 3' und den Rückschlusskörpern 7, 7' ist derart, dass ein erster Spalt S1 zwischen den Unterseiten der Joche und den jeweiligen darunterliegenden Arrays gebildet ist. Dieser Spalt wird üblicherweise auch als Luftspalt bezeichnet. Ferner existieren für jeden Rückschlusskörper die beiden Spalte S2, die zwischen einer jeweiligen Außenseite des Rückschlusskörpers und einer jeweiligen Innenseite der Permanentmagnetarrays gebildet sind. Aus Übersichtlichkeitsgründen sind nur einige der genannten Spalte mit dem Bezugszeichen S1 und S2 bezeichnet. Die jeweiligen Permanentmagnetarrays 5 bzw. 5' setzen sich aus einer Vielzahl von direkt hintereinander angeordneten rechteckigen Permanentmagneten zusammen, die aus Übersichtlichkeitsgründen nur an zwei Stellen mit dem Bezugszeichen 6 bezeichnet sind. Die Magnetisierungsrichtungen in den einzelnen Permanentmagneten sind durch entsprechende Pfeile angedeutet.

Durch die Permanentmagnete der einzelnen Arrays werden in Umfangsrichtung aufeinander folgende, sich wiederholende Abschnitte 501 gebildet, wobei sich der Verlauf der Magnetisierungsrichtungen von einem Abschnitt zum nächsten umkehrt. Innerhalb eines Abschnitts 501 sind die Magnetisierungsrichtungen der einzelnen Permanentmagnete 6 derart gewählt, dass sich bei der in Fig. 1 gezeigten Positionierung der Joche ein geschlossener Magnetfluss über das Joch und den zugeordneten Rückschlusskörper ausbildet. Hierfür umfasst ein jeweiliger Abschnitt 501 einen Teilabschnitt 502 aus drei Permanentmagneten mit Magnetisierungsrichtungen mit einer Komponente in axialer Richtung, einen Teilabschnitt 503 aus einem einzelnen Permanentmagneten mit einer Magnetisierungsrichtung in Umfangsrichtung UR, einen Teilabschnitt 504 aus drei Permanentmagneten mit Magnetisierungsrichtungen mit einer Komponente in radialer Richtung sowie einen Teilabschnitt 505 aus einem einzelnen Permanentmagneten mit einer Magnetisierungsrichtung in Umfangsrichtung UR.

Über derartig aufgebaute Abschnitte 501 ergibt sich der erwähnte geschlossene Magnetfluss. Für das Joch 3 verläuft dieser von dem linken Schenkel des Jochs über den Spalt S1 zu einem Teilabschnitt 503 des Arrays 5', von dort zu einem Teilabschnitt 502 des Arrays 5', wo er hin zu dem Spalt S2 zwischen Array 5' und Rückschlusskörper 7 gelenkt wird. Der Magnetfluss quert den Spalt und fließt durch den Rückschlusskörper 7 zu dem Teilsegment 502 des Arrays 5, wo er zu dem Teilsegment 503 und von dort zu dem Teilsegment 504 gelenkt wird. Durch das Teilsegment 504 wird der Magnetfluss auf den Spalt S1 unter dem rechten Schenkel des Jochs 3 gerichtet, so dass sich der Magnetfluss wieder schließt. Entsprechende Magnetflüsse ergeben sich auch für die anderen Joche.

Wie sich aus den obigen Ausführungen ergibt, wird somit ein für den Betrieb der Transversalflussmaschine erforderlicher geschlossener Magnetfluss sichergestellt, wobei gleichzeitig jedoch eine Beabstandung der Rückschlusskörper von den Jochen erreicht wird. Im Besonderen wird der Magnetfluss über erste Spalte zwischen Joch und Permanentmagnetarrays und zweite Spalte zwischen Rückschlusskörper und Permanentmagnetarrays gelenkt, wobei beide Spalte in unterschiedlichen Ebenen liegen. Durch die entsprechende Ausgestaltung der Permanentmagnetarrays wird der Magnetfluss dabei so gedreht, dass er sich zwischen den beiden Arrays über die Rückschlusskörper schließen kann.

Fig. 2 zeigt in schematischer Darstellung einen Gesamtaufbau einer dreiphasigen Transversalflussmaschine mit den jeweiligen in Fig. 1 dargestellten Phasen. Die Darstellung ist dabei nicht maßstabsgetreu. Insbesondere sind die in Fig. 2 dargestellten Rückschlusskörper 7 bzw. 7' analog zu Fig. 1 in Umfangsrichtung UR gegenüber den zugeordneten Jochen 3 bzw. 3' versetzt, was nicht aus Fig. 2 ersichtlich ist. Wie man aus Fig. 2 erkennt, ist der Rotor 2 dreiecksförmig ausgestaltet, wobei an jeder Dreiecksseite eine entsprechende Phase der Transversalflussmaschine ausgebildet ist. Das heißt, an jeder Dreieckseite sind die jeweiligen Permanentmagnetarrays 5 und 5' im Rotor ausgebildet, wobei benachbart hierzu der entsprechende Stator angeordnet ist. Von dem Stator sind wiederum die beiden Joche 3, 3', die Rückschlusskörper 7, 7' und die Ringleitung 4 gezeigt. Die Rückschlusskörper sind in entsprechenden Ausnehmungen des dreiecksförmigen Rotors geführt, was jedoch nicht aus Fig. 2 ersichtlich ist. Im Unterschied zu Fig. 1 werden als Ringleitungen anstatt von kreisförmigen Leitern halbkreisförmige Leiter verwendet.

Anstatt der in Fig. 2 gezeigten Anordnung der Phasen in einem Dreieck sind auch andere Ausgestaltungen möglich. Insbesondere kann der Rotor als Quadrat ausgestaltet sein, wobei an drei Seiten des Quadrats entsprechende Phasen vorgesehen sind. Ebenso kann der Rotor z.B. einen sechseckigen Querschnitt aufweisen und dabei 2 x 3 Phasen an den entsprechenden Kanten des Sechsecks bilden. Ferner können die dargestellten Ringleitungen auch als Hohlleiter mit einer Heat-Pipe oder einer Flüssigkeitskühlung (z.B. Wasser oder Öl) in deren Inneren ausgestaltet sein.

Die im Vorangegangenen beschriebenen Ausführungsformen der Erfindung weisen eine Reihe von Vorteilen auf. Insbesondere wird eine beabstandete Anordnung von Rückschlusskörpern zu entsprechenden Jochen erreicht und hierdurch eine magnetische Sättigung wirksam bekämpft. Dabei wird der Magnetfluss durch geeignete Drehung der Magnetisierungsrichtungen in den Permanentmagnetarrays geschlossen. Ein weiterer Vorteil der erfindungsgemäßen Transversalflussmaschine liegt darin, dass die Schenkel der Joche verkleinert werden können, da keine Rückschlusskörper auf den Oberseiten der Permanentmagnetarrays vorgesehen sind. Demzufolge kann der Ringleiter bis zum Luftspalt vorgezogen werden. Dies reduziert zusätzlich die Streuung, weil sich zwischen den Schenkeln eines U-förmigen Jochs nun weniger Streufluss ausbildet.

## Patentansprüche

1. Mehrphasige Transversalflussmaschine mit einem Stator (1) und einem Rotor (2), der in einer Umfangsrichtung (UR) um eine Achse relativ zum Stator (1) drehbar ist, wobei die Transversalflussmaschine für eine jeweilige Stromphase umfasst:
- eine elektrische Leitung (4), die entlang einer Mehrzahl von Jochen (3, 3') in der Umfangsrichtung (UR) verläuft, wobei die Leitung (4) und die Mehrzahl von Jochen (3, 3') in dem Stator (1) vorgesehen sind;
- ein Paar von in Umfangsrichtung (UR) parallel verlaufender Permanentmagnetarrays (5, 5'), welche jeweils eine Vielzahl von Permanentmagneten (6) umfassen und im Rotor (2) vorgesehen sind;
- eine Mehrzahl von Rückschlusskörpern (7, 7'), welche im Stator (1) vorgesehen sind, wobei jedem Joch (3, 3') ein Rückschlusskörper (7, 7') zugeordnet ist, der von dem zugehörigen Joch (3, 3') in radialer Richtung beabstandet ist;
- wobei sich die Magnetisierungsrichtung der Permanentmagnete (6) in den Permanentmagnetarrays (5, 5') derart verändert, dass ein geschlossener Magnetfluss an jedem Joch (3, 3') wiederholend während der Drehung des Rotors (2) auftritt, wobei der geschlossene Magnetfluss von einem Permanentmagnetarray (5, 5') des Paars über ein jeweiliges Joch (3, 3') zu dem anderen Permanentmagnetarray (5, 5') des Paars und von dort über den zugeordneten Rückschlusskörper (7, 7') zurück zu dem einen Permanentmagnetarray (5, 5') des Paars verläuft
**dadurch gekennzeichnet, dass**
- die jeweiligen Rückschlusskörper (7, 7') zwischen den Permanentmagnetarrays (5, 5') des Paars angeordnet sind.

2. Transversalflussmaschine nach Anspruch 1, **dadurch gekennzeichnet, dass** ein erster Spalt (S1) zwischen jedem Permanentmagnetarray (5, 5') und jedem Joch (3, 3') vorgesehen ist und ferner ein zweiter Spalt (S2) zwischen jedem Rückschlusskörper (7, 7') und jedem Permanentmagnetarray (5, 5') ausgebildet ist, wobei der erste Spalt (S1) zwischen den Unterseiten der jeweiligen Joche (3, 3') und den jeweiligen darunterliegenden Permanentmagnetarrays (5, 5') gebildet ist, und der zweite Spalt (S2) zwischen einer jeweiligen Außenseite des Rückschlusskörpers (7, 7') und einer jeweiligen Innenseite der Permanentmagnetarrays (5, 5') gebildet ist, und der geschlossene Magnetfluss an dem ersten Spalt (S1) und dem zweiten Spalt (S2) übertritt.

3. Transversalflussmaschine nach einem der vorhergehenden Ansprüche, **dadurch gekennzeichnet, dass** ein jeweiliger Rückschlusskörper (7, 7') gegenüber dem zugehörigen Joch (3, 3') in Umfangsrichtung (UR) versetzt ist.

4. Transversalflussmaschine nach einem der vorhergehenden Ansprüche, **dadurch gekennzeichnet, dass** die Permanentmagnete (6) der jeweiligen Permanentmagnetarrays (5, 5') in Umfangsrichtung (UR) direkt benachbart zueinander angeordnet sind.

5. Transversalflussmaschine nach einem der vorhergehenden Ansprüche in Kombination mit Anspruch 2, **dadurch gekennzeichnet, dass** die jeweiligen Permanentmagnetarrays (5, 5') in wiederholende Abschnitte entlang der Umfangsrichtung (UR) aufgeteilt sind, wobei sich die Magnetisierungsrichtung der Permanentmagnete (6) in den jeweiligen Permanentmagnetarrays (5, 5') derart verändert, dass sich die Richtung des geschlossenen Magnetflusses von einem Abschnitt (501) zum nächsten umkehrt und sich der geschlossene Magnetfluss in jedem Abschnitt (501) von einer Richtung im Wesentlichen senkrecht zum ersten Spalt (S1) zu einer Richtung im Wesentlichen senkrecht zum zweiten Spalt (S2) oder von einer Richtung im Wesentlichen senkrecht zum zweiten Spalt (S2) zu einer Richtung im Wesentlichen senkrecht zum ersten Spalt (S1) dreht.

6. Transversalflussmaschine nach einem der vorhergehenden Ansprüche, **dadurch gekennzeichnet, dass** die Transversalflussmaschine dreiphasig ausgestaltet ist.

7. Transversalflussmaschine nach einem der vorhergehenden Ansprüche, **dadurch gekennzeichnet, dass** der Rotor (2) den Querschnitt eines Dreiecks aufweist und an jeder Dreiecksseite für eine Stromphase ein Paar von Permanentmagnetarrays (5, 5') vorgesehen ist und Rückschlusskörper (7, 7') in Ausnehmungen an jeder Dreiecksseite geführt sind.

8. Transversalflussmaschine nach einem der vorhergehenden Ansprüche, **dadurch gekennzeichnet, dass** die Joche (3, 3') U-förmig sind und eine jeweilige Leitung (4) zwischen den Schenkeln der U-förmigen Joche einer entsprechenden Phase angeordnet ist.

9. Transversalflussmaschine nach einem der vorhergehenden Ansprüche, **dadurch gekennzeichnet, dass** eine jeweilige Leitung (4) einen kreisförmigen Außendurchmesser aufweist.

10. Transversalflussmaschine nach einem der vorhergehenden Ansprüche, **dadurch gekennzeichnet, dass** eine jeweilige Leitung (4) als Hohlleiter ausgebildet ist, in dessen Innerem eine Kühlflüssigkeit geführt ist oder eine Heat-Pipe vorgesehen ist.

## Claims

1. Polyphase transverse flux machine having a stator (1) and a rotor (2) which can be rotated relative to the stator (1) about an axis in a circumferential direction (UR), wherein the transverse flex machine comprises for a respective current phase:
- an electrical line (4) which runs along a multiplicity of yokes (3,3') in the circumferential direction (UR), wherein the line (4) and the multiplicity of the yokes (3,3') are provided in the stator (1);
- a pair of permanent magnet arrays (5,5') which run in parallel in the circumferential direction (UR) and which each comprise a multiplicity of permanent magnets (6) and are provided in the rotor (2);
- a multiplicity of return path bodies (7,7') which are provided in the stator (1), wherein each yoke (3,3') is assigned a return path body (7,7') which is spaced apart from the associated yoke (3,3') in the radial direction;
- wherein the magnetization direction of the permanent magnets (6) in the permanent magnet arrays (5,5') changes in such a way that a closed magnetic flux repeatedly occurs at each yoke (3,3') during the rotation of the rotor (2), wherein the closed magnetic flux runs from one permanent magnet array (5,5') of the pair via a respectively yoke (3,3') to the other permanent magnet array (5,5') of the pair, and from there via the assigned return path body (7,7') back to the first-mentioned permanent magnet array (5, 5') of the pair, **characterized in that**
- the respective return path bodies (7,7') are arranged between the permanent magnet arrays (5, 5') of the pair.

2. Transverse flux machine according to Claim 1, **characterized in that** a first gap (S1) is provided between each permanent magnet array (5, 5') and each yoke (3,3') and in addition a second gap (S2) is formed between each return path body (7,7') and each permanent magnet array (5,5'), wherein the first gap (S1) is formed between the undersides of the respective yokes (3,3') and the respective permanent magnet arrays (5, 5') lying underneath, and the second gap (S2) is formed between a respective outer side of the return path body (7,7') and a respective inner side of the permanent magnet array (5,5'), and the closed magnetic flux escapes at the first gap (S1) and the second gap (S2).

3. Transverse flux machine according to either of the preceding claims, **characterized in that** a respective return path body (7,7') is offset with respect to the associated yoke (3,3') in the circumferential direction (UR) .

4. Transverse flux machine according to one of the preceding claims, **characterized in that** the permanent magnets (6) of the respective permanent magnet arrays (5, 5') are arranged directly adjacent to one another in the circumferential direction (UR).

5. Transverse flux machine according to one of the preceding claims in combination with Claim 2, **characterized in that** the respective permanent magnet arrays (5, 5') are divided into repeating sections along the circumferential direction (UR), wherein the magnetization direction of the permanent magnets (6) in the respective permanent magnet arrays (5, 5') changes in such a way that the direction of the closed magnetic flux reverses from one section (501) to the next, and the closed magnetic flux in each section (501) rotates from a direction essentially perpendicular with respect to the first gap (S1) to a direction essentially perpendicular with respect to the second gap (S2) or from a direction essentially perpendicular with respect to the second gap (S2) to a direction essentially perpendicular with respect to the first gap (S1).

6. Transverse flux machine according to one of the preceding claims, **characterized in that** the transverse flux machine is configured in a three-phase fashion.

7. Transverse flux machine according to one of the preceding claims, **characterized in that** the rotor (2) has the cross section of a triangle, and a pair of permanent magnet arrays (5, 5') is provided on each triangular side for a current phase, and return path bodies (7,7') are guided in recesses on each triangular side.

8. Transverse flux machine according to one of the preceding claims, **characterized in that** the yokes (3,3') are U-shaped, and a respective line (4) is arranged between the limbs of the U-shaped yokes of a corresponding phase.

9. Transverse flux machine according to one of the preceding claims, **characterized in that** a respective line (4) has a circular outer diameter.

10. Transverse flux machine according to one of the preceding claims, **characterized in that** a respective line (4) is embodied as a hollow conductor in the interior of which a cooling fluid is guided or a heating pipe is provided.

## Revendications

1. Machine à flux transversal multiphasée, comprenant un stator (1) et un rotor (2) qui peut tourner par rapport au stator (1) dans une direction circonférentielle (UR) autour d'un axe, la machine à flux transversal comprenant pour chaque phase de courant :
- une ligne électrique (4) qui s'étend le long d'une pluralité de culasses (3, 3') dans la direction circonférentielle (UR), la ligne (4) et la pluralité de culasses (3, 3') étant prévues dans le stator (1) ;
- une paire d'ensembles d'aimants permanents (5, 5') s'étendant en parallèle dans la direction circonférentielle (UR) qui comprennent respectivement une pluralité d'aimants permanents (6) et sont prévus dans le rotor (2) ;
- une pluralité de corps de retour magnétique (7, 7') qui sont prévus dans le stator (1), chaque culasse (3, 3') étant associée à un corps de retour magnétique (7, 7') qui est espacé de la culasse associée (3, 3') dans la direction radiale ;
- la direction d'aimantation des aimants permanents (6) dans les ensembles d'aimants permanents (5, 5') variant de telle sorte qu'un flux magnétique fermé apparaît de manière répétée au niveau de chaque culasse (3, 3') pendant la rotation du rotor (2), le flux magnétique fermé allant d'un ensemble d'aimants permanents (5, 5') de la paire à l'autre ensemble d'aimants permanents (5, 5') de la paire en passant par une culasse respective (3, 3'), et revenant de là audit un ensemble d'aimants permanents (5, 5') de la paire en passant par le corps de retour magnétique (7, 7') associé,
**caractérisée en ce que** les corps de retour magnétique (7, 7') respectifs sont disposés entre les ensembles d'aimants permanents (5, 5') de la paire.

2. Machine à flux transversal selon la revendication 1, **caractérisée en ce qu'**un premier entrefer (S1) est prévu entre chaque ensemble d'aimants permanents (5, 5') et chaque culasse (3, 3'), et en outre un deuxième entrefer (S2) est réalisé entre chaque corps de retour magnétique (7, 7') et chaque ensemble d'aimants permanents (5, 5'), le premier entrefer (S1) étant formé entre les faces inférieures des culasses respectives (3, 3') et les ensembles d'aimants permanents (5, 5') sous-jacents respectifs, et le deuxième entrefer (S2) est formé entre une face extérieure respective du corps de retour magnétique (7, 7') et une face intérieure respective des ensembles d'aimants permanents (5, 5'), et le flux magnétique fermé traverse au niveau du premier entrefer (S1) et du deuxième entrefer (S2).

3. Machine à flux transversal selon l'une quelconque des revendications précédentes, **caractérisée en ce qu'**un corps de retour magnétique (7, 7') respectif est décalé par rapport à la culasse (3, 3') associée dans la direction circonférentielle (UR).

4. Machine à flux transversal selon l'une quelconque des revendications précédentes, **caractérisée en ce que** les aimants permanents (6) des ensembles d'aimants permanents (5, 5') respectifs sont disposés de manière directement voisine les uns par rapport aux autres dans la direction circonférentielle (UR).

5. Machine à flux transversal selon l'une quelconque des revendications précédentes en combinaison avec la revendication 2, **caractérisée en ce que** les ensembles d'aimants permanents (5, 5') respectifs sont divisés en sections répétées le long de la direction circonférentielle (UR), la direction d'aimantation des aimants permanents (6) dans les ensembles d'aimants permanents (5, 5') respectifs variant de telle sorte que la direction du flux magnétique fermé est inversée d'une section (501) à l'autre, et le flux magnétique fermé dans chaque section (501) tourne d'une direction substantiellement perpendiculaire au premier entrefer (S1) vers une direction substantiellement perpendiculaire au deuxième entrefer (S2) ou d'une direction substantiellement perpendiculaire au deuxième entrefer (S2) vers une direction substantiellement perpendiculaire au premier entrefer (S1).

6. Machine à flux transversal selon l'une quelconque des revendications précédentes, **caractérisée en ce que** la machine à flux transversal est configurée avec trois phases.

7. Machine à flux transversal selon l'une quelconque des revendications précédentes, **caractérisée en ce que** le rotor (2) présente la section transversale d'un triangle, et sur chaque côté du triangle, pour une phase de courant, une paire d'ensembles d'aimants permanents (5, 5') est prévue et des corps de retour magnétique (7, 7') sont guidés dans des évidements sur chaque côté du triangle.

8. Machine à flux transversal selon l'une quelconque des revendications précédentes, **caractérisée en ce que** les culasses (3, 3') sont en forme de U et une ligne respective (4) est disposée entre les branches des culasses en forme de U d'une phase correspondante.

9. Machine à flux transversal selon l'une quelconque des revendications précédentes, **caractérisée en ce qu'**une ligne respective (4) présente un diamètre extérieur circulaire.

10. Machine à flux transversal selon l'une quelconque des revendications précédentes, **caractérisée en ce qu'**une ligne respective (4) est réalisée sous la forme d'un guide d'ondes à l'intérieur duquel passe un liquide de refroidissement ou un tube de chauffe est prévu.
